# EUROPEAN PATENT SPECIFICATION

(11) **EP 0 720 590 B1**
(45) Date of publication and mention of the grant of the patent: **30.10.2002**
(21) Application number: 94926019.4
(22) Date of filing: 24.08.1994
(51) Int. Cl.: C02F 3/08

(54) **ROTATING BIOLOGICAL FILTER SYSTEM**
ROTIERENDES, BIOLOGISCHES FILTERSYSTEM
SYSTEME DE FILTRE BIOLOGIQUE ROTATIF

(30) Priority: 22.09.1993 US 125445
(43) Date of publication of application: 10.07.1996
(73) Proprietor: AQUARIA, INC., Moorpark, CA 93021 (US)
(72) Inventor: HICKOK, Roy, S., Moorpark, CA 93021 (US); McGrath, Roger, W., California 93063 (US)
(74) Representative: Allman, Peter John
(86) International application number: US9409580
(87) International publication number: WO95008512

(56) References cited:
- EP-A- 0 008 810
- WO-A-85/04306
- WO-A-86/05770
- WO-A-92/21620
- GB-A- 2 250 021
- US-A- 4 268 385
- US-A- 5 078 867

## Description

The present invention relates to a biological filter assembly for treating water in an aquatic system.

Under ideal conditions, aquatic systems including aquariums, fish ponds, and commercial fish and lobster holding tanks, will act as substantially self-contained ecosystems. That is, except for the need of the aquatic system operator to provide food to the fish within the system, the ideal aquatic system should maintain itself as an environment suitable to sustain and foster the healthy growth of the aquatic life which it contains. However, the aquatic life within the system will typically release wastes and other byproducts into the system water. In time, the buildup of undesirable wastes and pollutants can reach toxic levels and eventually poison the aquatic life within the system. As a result, it is necessary for an aquatic system to include a system for filtering and purifying the system water to eliminate undesirable wastes and toxins and to maintain a healthy environment.

Typical aquatic filters rely on mechanical filtration to remove detritus from the system water. Such a mechanical filter can be one of several types. For example, in under gravel type filtration systems for aquariums, a pump circulates the aquarium water through a bed of gravel supported on a suitable structure. The gravel bed, which is typically located within the aquarium, traps and removes solid wastes and detritus from the water as it flows through the bed. In other mechanical filtration systems, a pump removes aquarium water from the aquarium and circulates the water through a filter element and back into the aquarium. Like the gravel bed, the filter element traps and removes harmful detritus from the circulating aquarium water.

In addition to mechanical filtration, chemical filtration can be used to maintain a life-supporting environment within an aquatic system. Chemical filtration systems typically circulate the system water through a chemical filter element, such as activated carbon. This type of filtration is helpful in removing dissolved organic compounds and carbon dioxide and can help to maintain a stable pH within the aquatic system.

However, neither mechanical nor chemical filtration techniques are typically effective in removing such waste byproducts as ammonia, nitrites, or nitrates. Some of these nitrogen based contaminants, particularly ammonia, can be extremely harmful to the types of aquatic life typically found in aquatic systems. An effective method of removing such contaminants is biological filtration. Biological filtration relies on the presence of aerobic bacteria to convert some water born toxic wastes, particularly ammonia, to nontoxic or less toxic substances. It is possible for aerobic bacteria to grow, to a limited extent, on mechanical filter elements. Thus there may be some biological filtration along with the mechanical filtration described above.

However, typically, the aerobic bacteria which grows on the mechanical filter elements, or the under gravel bed, must rely on the dissolved oxygen present in the water for its growth. As a result of the limited availability of oxygen, coupled with reduced water flow as the filter becomes plugged, the amount of aerobic bacteria, and hence the degree of biological filtration, associated with mechanical filter elements or under gravel beds is inherently limited. Further, as mechanical filter elements become plugged with detritus, they must be replaced in order to maintain water flow. Each time a filter element is replaced, any aerobic bacteria which may have colonized the filter element are removed from the system and the colonization must restart on the new filter element. During the recolonization period, the environmental balance within the system may be jeopardized by the absence of sufficient amounts of aerobic bacteria.

Trickle filters have been devised as one method of fostering the growth of aerobic bacteria and increasing the efficiency of the biological filtration process. In trickle filters, water is typically removed from the aquarium, tanks or pond and allowed to trickle over a bed of lava rock, plastic balls, or the like. Because the filter bed is not submerged, there is more oxygen available for the growth of aerobic bacteria. However, trickle filters can take up a relatively large area and usually require dedicated plumbing and pump fixtures. As a result, such filters can be expensive and impractical in many applications in which a large amount of water is required to be treated.

Large scale waste water treatment facilities frequently use rotating biological contactors in an effort to promote the growth of aerobic bacteria. Rotating biological contactors typically include a number of partially submerged filter elements, frequently disc shaped, mounted along a central shaft. The central shaft is driven to rotate the elements such that at least a portion of each filter element is alternately submerged and exposed to the air. In this manner, the growth of aerobic bacteria on the surface of the filter elements is promoted by the intermittent exposure to the oxygen in the air and the biological filtration of the waste water is promoted by the intermittent submersion of the bacteria bearing surfaces. However, rotating biological contactors from waste water treatment facilities are usually not readily compatible for use with aquariums, fish holding tanks and ponds. In part, this is due to their large size, the need for a separate drive mechanism, the lack of an appropriate location for such a device within the aquarium, tank or pond, and the lowered efficiency in biological filtration when the size of the rotating biological contactors is reduced for use with aquatic systems.

Rotating biological filters which are intended primarily for use in home or office aquariums are described in US Patent 5419831 and US Patent 5423978. However, these aquarium filters are not readily adapted to use in large commercial holding tanks and outdoor fish ponds.

US Patent 5078867 shows a filter element having paddles on pleats to enable the impact of a stream of flowing water to rotate a filter element. The flowing water is applied beneath the surface of a body of water in which the filter element rotates.

Published International Patent WO-A-9221620 shows a filter element which is rotated by the force of water impinging on a surface of the element. The surface is provided with pleats or paddles against which the water is directed and as a result has a complicated shape.

It is an object of the present invention to provide a biological filter assembly for treating water in an aquatic system which effectively reduces the quantity of toxic substances, particularly ammonia, in the system water.

It is another object of the present invention to provide a biological filter assembly which is reliable and easily manufactured.

It is yet another object of the present invention to provide a biological filter assembly which is compact, easy to install, and simple to use.

According to the present invention, there is provided a biological filter assembly for treating water in an aquatic system, comprising:
a porous water absorbing body of material adapted for rotation; and
means for supplying water to the body to be absorbed by a portion of the body so as to cause the body to rotate about an axis, characterized in that said water absorbing body is constructed and positioned relative to said means for supplying water in a manner to be rotated primarily by the weight of water absorbed in said body.

The body may be a unitary mass of reticulated, cellular foam or a mass of interconnected fibers through which the axis of rotation passes.

A float may be provided for rotatably supporting the body partially submerged in the water to be treated. The body may be a generally cylindrical mass of material; the means for supplying water may provide a flow of water onto said cylindrical body to be absorbed by said cylindrical body wherein the weight of said absorbed water unbalances said cylindrical body about said axis of rotation to thereby impart rotational movement to said cylindrical body to expose at least a portion of said cylindrical body alternately to water and the atmosphere; and control means such as a weir may be provided for controlling the rotational speed of said cylindrical body.

As a consequence of the filter body being unbalanced by the additional absorbed water, rotational movement is imparted to the filter body by the additional weight of the water absorbed on one side of the body. As the filter body rotates, at least a portion of the filter body is alternately exposed to the water and the atmosphere.

Other objects and aspects of the invention will become apparent to those skilled in the art from the detailed description of the invention which is presented by way of example and not as a limitation of the present invention.

### BRIEF DESCRIPTION OF THE DRAWINGS

Figure 1 is a schematic side view of a rotary filter system in accordance with a preferred embodiment of the present invention with a cross-sectional view of a rotary filter element.
Figure 2 is an enlarged photo of a cross-section of a porous mass of a reticulated ether-based polyurethane cellular foam material used for the filter media of the rotary filter element in the system shown in Figure 1.
Figure 3 is an enlarged photo of a cross-section of a porous mass of fibrous material sold under the trade name "Aquacell Plus" by Hobbs Industries, which is alternatively used as a material for the filter media for the rotary filter element in the system shown in Figure 1.
Figure 4 is a perspective view of a rotary filter system in accordance with a preferred embodiment of the present invention.
Figure 5 is an exploded view of a pre-filtration assembly and a housing assembly of the filter system of Figure 4.
Figure 6 is an exploded view of a rotary filter wheel assembly of the filter system of Figure 4.
Figure 7 is an exploded view of the rotary filter element of the filter system of Figure 4.
Figure 8 is a partially broken perspective view of a biological rotary filter system in accordance with an alternative embodiment of the present invention.
Figure 9 is an exploded perspective view of the biological rotary filter system of Figure 8.

### DESCRIPTION OF THE ILLUSTRATED EMBODIMENT

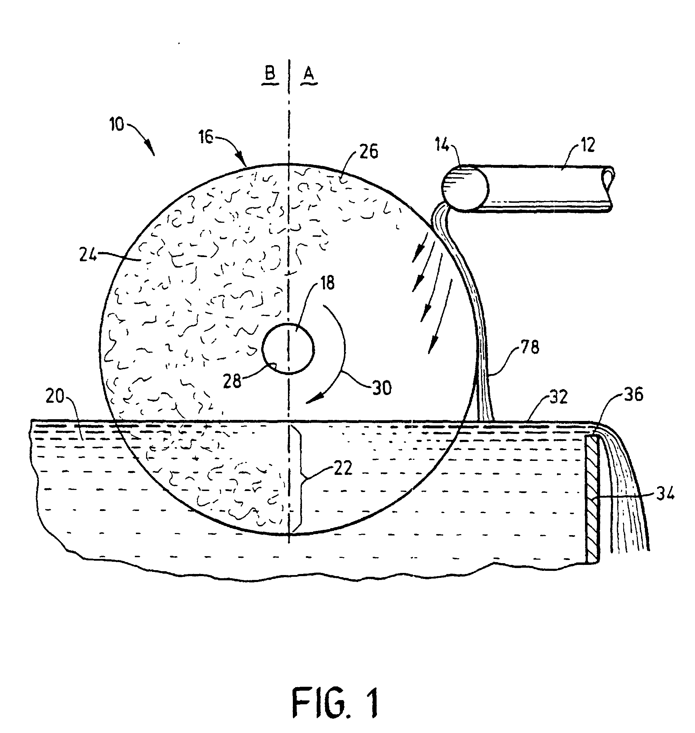

An aquatic filter system in accordance with a preferred embodiment of the present invention is indicated in Figure 1 as reference numeral 10. In the illustrated filter system 10, water is drawn from an aquarium, holding tank or fish pond (not shown) through an intake tube 12 by a pump or other appropriate devices (not shown). The water flows through a spray bar 14 and is poured onto a rotary filter element 16. The rotary filter element 16 is rotatably mounted about a shaft 18 and partially submerged in standing water 20 by a predetermined depth 22.

The rotary filter element 16 includes filter media which are preferably provided by a porous, water absorptive mass of material 24 formed into a one-piece body 26. In the illustrated embodiment, the body 26 has the shape of a cylinder which defines a central through-hole 28 to receive the shaft 18 about which the cylinder 26 rotates. Alternatively, the filter media of the cylinder 26 may be formed by a plurality of water-absorptive disks, each having a central aperture. The plurality of disks are stacked to each other to form a cylindrical shape. Although the body 26 is illustrated as a cylinder, the filter media body may have a variety of other shapes as well.

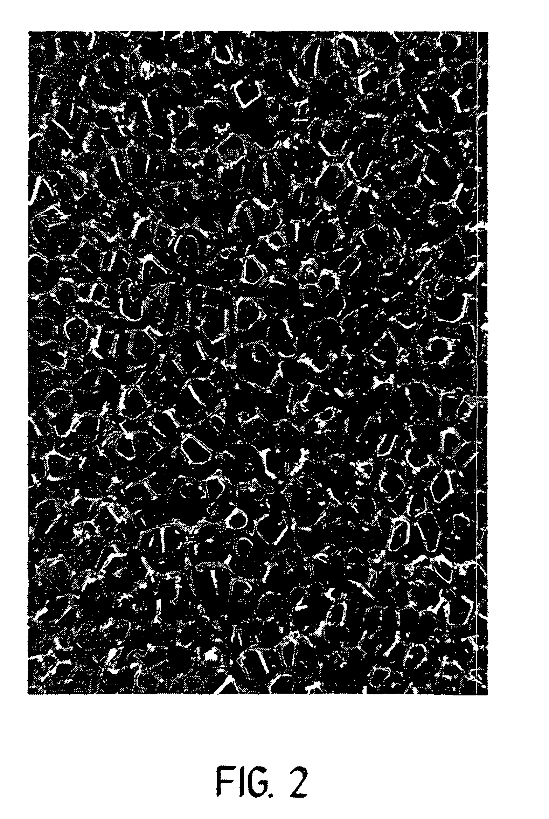

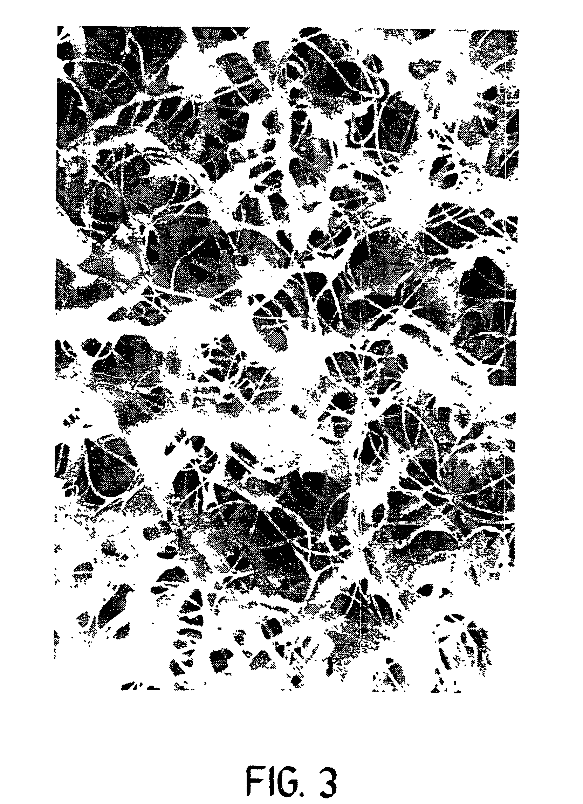

Any one of several appropriate water-absorptive or porous bodies of materials may be used to form the media cylinder 26. However, to maximize the surface areas of the filter media which are available for the growth of aerobic bacteria, and to facilitate quick absorption and drainage of water, the rotary media cylinder 26 is preferably formed by a porous, reticulated cellular sponge-like material which comprises a mass of numerous broken cells interconnected by strands. For example, one such porous body of material is a reticulated ether-based polyurethane foam (see photo of Figure 2) having a porosity of 4-24 pores per cm (10-60 pores per inch). In another preferred embodiment of the present invention, the media cylinder 26 of the rotary filter element 16 may be formed by a porous, reticulated, fibrous material sold under the trade name "Aquacell Plus" (see photo of Figure 3) by Hobbs Industries. The Aquacell Plus material comprises a mass of numerous fibers and a resin which bridges between the fibers to define numerous irregular sized broken cells. It has been recognized that water readily permeates through the pores of the reticulated mass such that the porous body of material can relatively promptly absorb and then subsequently drain water.

Referring back to Figure 1, the water from the bar 14 is generally applied to one side only, for example, side A of the surface of the filter element 16 so that the applied water is absorbed primarily by one side only (side A) of the media cylinder 26. As a result, the applied water adds additional weight on side A of the filter element 16 which unbalances the filter element about the shaft 18, causing the filter element 16 to rotate about the shaft 18, causing the filter element 16 to rotate about the shaft 18 in the direction of the arrow 30. To unbalance the filter element 16 about the shaft 18, the system water may be sprayed or otherwise applied along the entire length or only at a limited area along the length of the cylindrical filter wheel element 16. Aquatic system water absorbed by the filter element 16 subsequently drains from the porous mass of material on side B of the filter media cylinder 26 as each portion of the filter media cylinder rotates upwardly in turn out of the standing water 20. Therefore, as long is water is applied to side A of the media cylinder of filter element 16, the porous mass of side A will contain more absorbed water than side B of the porous mass. As a consequence, side A will apply a greater moment arm on the shaft 18 as compared to the moment arm applied by side B. In other words, the sides A and B will be unbalanced, causing the filter element 16 to rotate as long as water is applied to side A of the filter element.

It is believed that the rotational force applied to the filter element 16 is primarily that provided by the net difference in weight of the water absorbed by the two sides of the absorptive mass of the filter media cylinder, rather than any impulse force provided by water striking the filter element from the spray bar 14. As a consequence, water can be applied to one side of the filter element 16 from any direction, including a direction which opposes the rotation of the filter element.

As the filter element 16 rotates each portion of the filter media cylinder 26 in turn is alternately exposed to the system water and the air which fosters the growth of aerobic bacteria on the surfaces of the porous mass of the filter media cylinder 26 and brings the aerobic bacteria into contact with the water being treated. In this manner, the aerobic bacteria on the surfaces of the filter media cylinder 26 can remove toxins, including ammonia and nitrites, from the treated water. Since the filter media cylinder 26 is formed by a water-absorptive, porous mass of material, the combined internal and external surface areas of the filter media cylinder 26 provide an extremely large effective surface area in contact with system water, which is much larger than the external surface of a non-porous filter element. As a result, the efficiency of the biological filtration is substantially improved.

It is believed that the cylindrical filter element 16 should preferably rotate at a rotation speed of approximately 0.5 to 10 R.P.M. (revolutions per minute), more preferably at approximately 1 to 5 R.P.M. to provide an optimum biological filtration efficiency. In one aspect of the present invention, the rotation speed of the filter element 16 is determined by the submersion depth 22, rate of the water flow from the spray bar 14 and the distance from the centerline of filter element 16 to where the water flow is deposited on filter element 16. Thus, in some applications it may be desirable to vary one or more of the submersion depth, the position the water is deposited on the filter element or the water flow rate in order to make the device rotational speed easy to adjust under a variety of operating conditions. In a preferred embodiment of the present invention, the submersion depth 22 of the cylindrical filter wheel element 16 is selected to be approximately 20 ― 40% of the diameter of the media cylinder 26, more preferably approximately 30 ― 40% of the diameter of the cylinder 26 to achieve the above mentioned rotation speed.

The submersion depth 22 may be changed by any one of various methods. For example, the position of the shaft 18 may be changed with respect to the water level 32 to change the submersion depth 22. Alternatively, the water level 32 may be changed to change the submersion depth 22. In a preferred embodiment of the present invention, as described later in greater detail, the water level is adjusted by a weir 34. The weir 34 may be raised or lowered so that the level of water flowing out over the weir 34 may be changed.

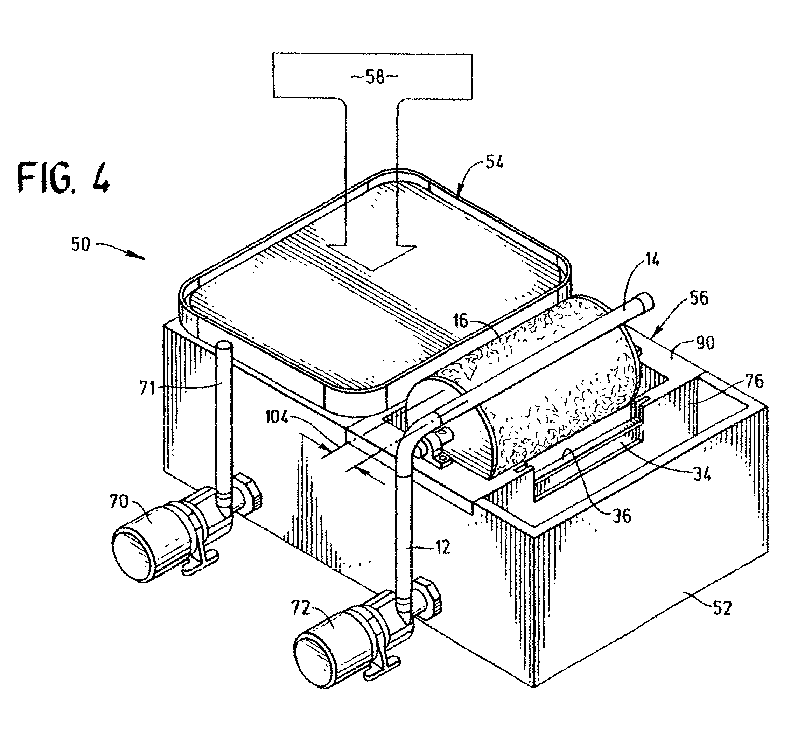

Figures 4 ― 6 show a biological aquatic filtration system 50 in accordance with an alternative embodiment of the present invention. As best seen in Figure 4, the biological aquatic filtration system 50 includes a sump housing 52 which contains a pre-filtration assembly 54 and a biological wheel filtering assembly 56. Water is drawn from the aquarium, tank, reservoir or pond 58 by a pump (not shown) or other appropriate devices. The water flows into the sump housing 52 through the pre-filtration assembly 54, and then is pumped to the biological wheel filtering assembly 56.

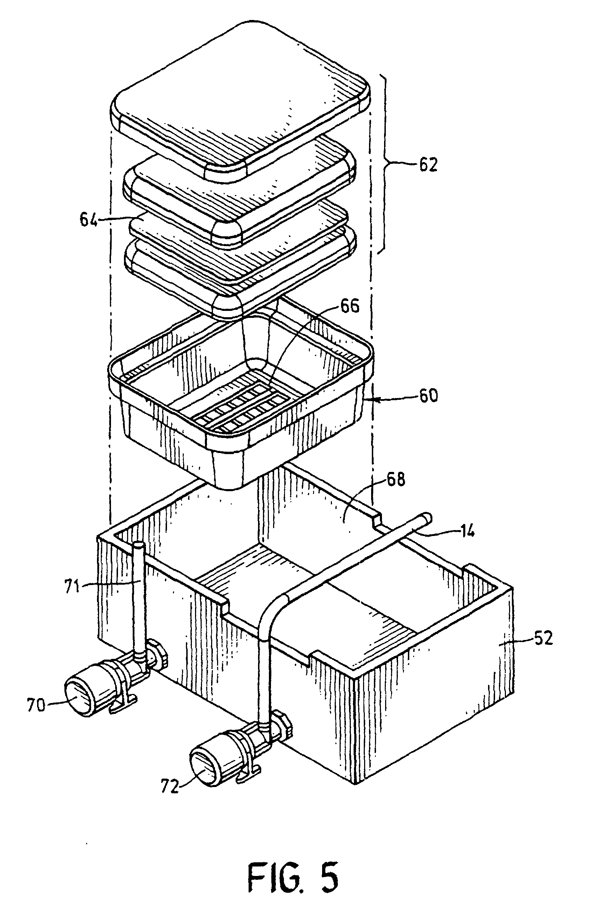

As best shown in Figure 5, the pre-filtration assembly 54 includes a filter box 60 which is dimensioned to fit inside the sump housing 52. The filter box 60 contains therein a plurality of filter pads with activated carbon placed therein. In one embodiment of the present invention, filter pads 62 are provided in the filter box 60 together with one or more of a variety of filtering chemicals such as a layer of activated carbon 64. The filter box 60 may be provided with a plurality of openings 66 adjacent the bottom thereof to allow the water filtered through the filter pads 62 and the activated carbon 64 to flow out of the filter box 60 into a sump 68 of the sump housing 52. As a result, the system water entering the sump 68 is mechanically and chemically filtered.

A first pump 70 is adapted to draw the filtered water out of the sump 68 and to return the filtered water through a return tube 71 to the tank 58. A second pump 72 is adapted to draw the filtered water out of the sump 68 and to pump the filtered water into the spray tube 14 which is positioned over the biological wheel filtering assembly 56. The flow rate from the tube 14 may be controlled by means of a valve (not shown) or controlling the speed of the pump 72.

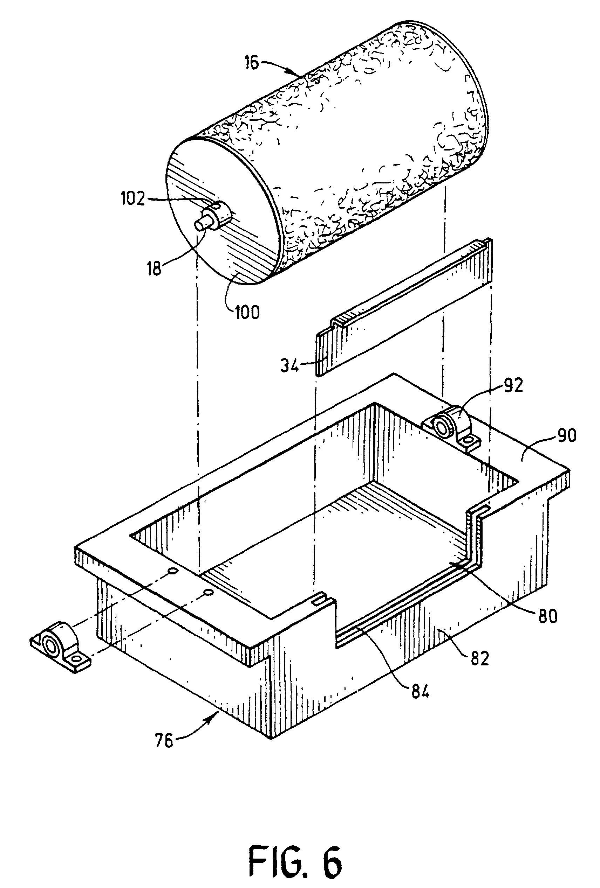

As best shown in Figures 4 and 6, the biological wheel filtering assembly 56 includes a rotary filter tray 76 and the rotary filter element 16 which is rotatably mounted to the shelves 90 of the rotary filter tray 76 by bearing housings 92. The rotary filter tray 76 has an opening 80 provided in one side wall 82 of the rotary filter tray 76. Grooves 84 are formed in the wall 82 along the opening 80 for receiving therein a weir 34. The height 36 of the weir 34 is adjusted by sliding the weir 34 within the grooves 84. When the rotary filter tray 76 is filled with water, the water flows out of the rotary filter tray 76 over the weir 34. Thus the adjustable height 36 of the weir 34 determines the level of water in the rotary filter tray 76. In an alternative embodiment, weirs having a variety of different heights may be used to adjust the level of water in the rotary filter tray 76.

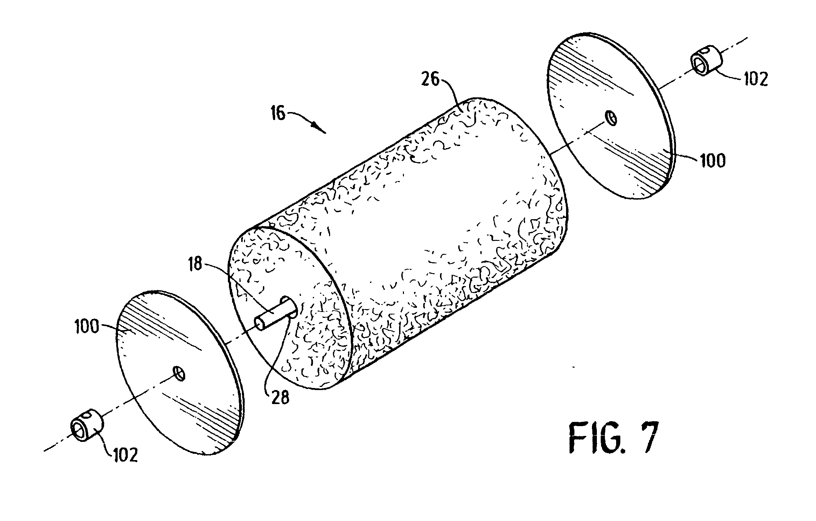

As shown in Figure 7, the rotary filter element 16 includes the one-piece cylinder 26 formed of a unitary porous mass of material. The cylinder 26 is provided with an aperture 28 for receiving a central shaft 18. However, in other embodiments, it may be desirable to provide a stub shaft on each of the end plates 100 rather than a single central shaft 18 extending through the entire filter element 16.

In an alternative embodiment, the rotary filter element 16 may be formed by a plurality of disks (not shown), each formed of a unitary porous mass of material and having a central aperture. The disks can be stacked to each other to form a cylindrical shape. The cylinder 26 may be lightly compressed between a pair of end plates 100 so that the cylinder 26 and the central shaft 18 rotate together. The end plates 100 are mounted on the central shaft 18 by hubs 102 fastened by appropriate devices such as screws to both ends of the central shaft 18. In alternative embodiments, the cylinder 26 may be coupled to the central shaft 18 by means of an adhesive, a friction fit, or any other suitable manner which will be apparent to those skilled in the art.

As previously mentioned, the rotary filter element 16 is preferably formed by a reticulated ether-based polyurethane foam with a porosity of 4-24 pores per cm (10-60 pores per inch). Alternatively, the rotary filter element 16 may be formed by a reticulated, fibrous material such as the material sold under the trade name "Aquacell Plus" by Hobbs Industries. The reticulated ether-based polyurethane foam and fibrous mass have a very large effective surface area and readily absorb and drain water to promote the growth of beneficial bacteria. However, it should be understood that there are a variety of other materials which can be formed into a body or mass which relatively promptly absorbs and drains water. Accordingly, the scope of the present invention should not be limited by those materials expressly described herein.

In the illustrated embodiment as shown in Figure 4, the spray bar 14 is positioned so that filtered water from the spray bar 14 is deposited only on one side of the media cylinder 26 with respect to a center 104 of the cylinder 26 (on the right hand side of the wheel element when viewed from the side at which the pumps 70 and 72 are provided, as illustrated in Figure 4). It is appreciated that most, if not all, of the applied water is absorbed by the media cylinder 26 due to its absorptive nature and is absorbed primarily at the right side of the cylinder 26. As a result, the absorbed water adds weight on the right side of the cylinder 26 and unbalances the cylinder 26, causing the filter element 16 to rotate about the shaft 18. Depending upon the flow rate of the applied water and the absorptive capacity of the cylinder 26, some water may not be fully absorbed by the cylinder but may instead run over the surface of the cylinder as depicted at 78 in Figure 1.

The spray bar 14 may have a plurality of apertures (not shown) provided along substantially the entire length thereof to deposit water along substantially the entire length of the media cylinder 26 to unbalance the filter element 16 about the shaft 18. In an alternative embodiment, the spray bar 14 may have a fewer number of apertures so that the water may be sprayed only in a limited area along the length of the media cylinder 26. The portion of the cylinder 26 (relative to its centerline) upon which the water is applied may be controlled by displacing the spray tube either linearly or rotationally as appropriate to achieve the desired cylinder rotational speed.

In yet another alternative embodiment, the prefiltration assembly 54 may be positioned above the filter element 16 with the openings 66 or other suitable openings of the filter box 60 being directed toward the filter element 16 so that water exiting from the prefiltration assembly 54 is deposited directly onto the desired portion of the rotating filter element 16. As a consequence, the pump 72 and spray bar 14 can be eliminated.

As the water is sprayed over the media cylinder 26, causing the filter element 16 to rotate, each portion in turn of the media cylinder 26 is alternately exposed to the system water 20 and the air to foster the growth of aerobic bacteria on the internal and external surfaces of the cylinder 26. The rotation also brings the aerobic bacteria into contact with the system water to treat the water. The biologically filtered water passes over the weir 34 to the sump tank 52 where it is returned by the pump 70 to the tank or pond. Since the media cylinder 26 is formed by a porous water-absorptive mass of material, the total surface areas of the filter element 16 which are in contact with the system water are substantially large as compared with the external surface of a non-porous filter element of similar size. As a result, the efficiency in the biological filtration is substantially improved.

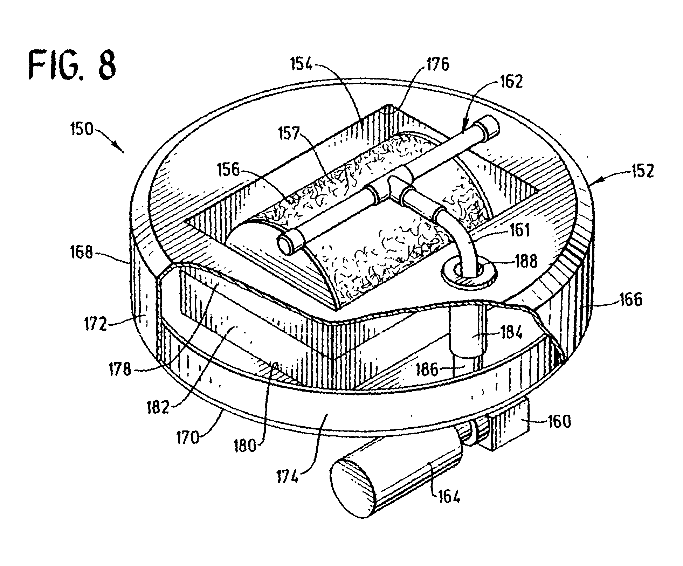

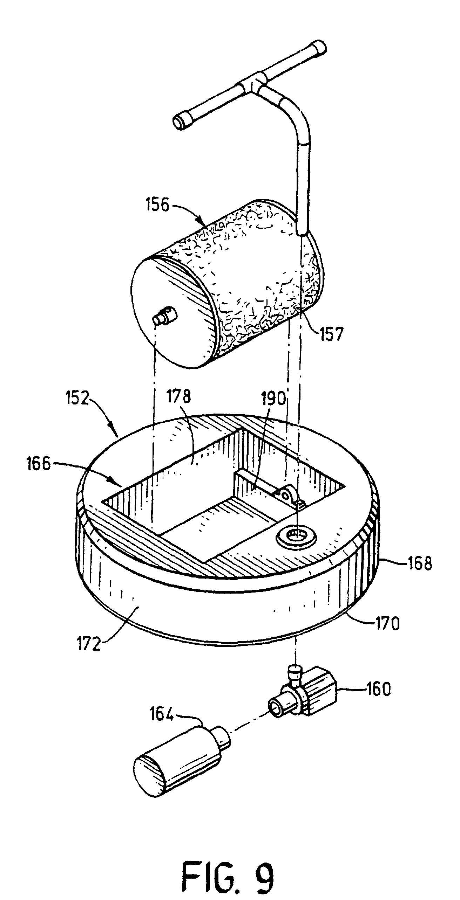

Figures 8 and 9 show a biological aquatic filtration system 150 in accordance with an alternative embodiment of the present invention. In this embodiment, the biological filtration system 150 is provided with a floating device 152 so that the biological filtration system 150 can float in a pond, a water reservoir, or other body of water and directly biologically treat the water in which it is floating.

The floating device 152 defines a central opening 154 therein for receiving a rotary filter element 156 comprising a porous filter media cylinder 157. A submersible pump 160 is provided at the bottom of the floating device 152 to pump water in which the device 152 is floating to a spray bar 162 which is positioned over the rotary filter element 156. In the illustrated embodiment, the spray bar 162 is coupled to the submersible pump 160 through a connector tube 161 which extends through the floating device 152. A strainer 164 may be coupled to the submersible pump 160 for the mechanical and chemical filtration of the water. The submersible pump 160 may be operated by any one of appropriate power sources including, for example, solar cells, batteries and suitably sealed power lines.

In the illustrated embodiment as best shown in Figure 8, the floating device 152 comprises a generally cylindrical float housing 166. The float housing 166 includes an upper section 168 and a lower section 170 which sealingly couples to the upper section 168. Preferably, the upper and lower sections 168 and 170 may be both made of any one of water impermeable materials, such as plastic and glass fiber. In other preferred embodiments, the float housing 166 may have a ventilated cover (not shown) which would completely enclose the rotary filter element 156 and the spray bar 162. Furthermore, the floating device 152 may include an anchoring device (not shown).

The upper section 168 has a circumferential side wall 172 which generally sealingly engages with a circumferential side wall 174 of the lower section 170. In other preferred embodiments, a seal ring (not shown) may be provided between the circumferential side walls 172 and 174 to provide water-tight sealing, and the upper section 168 and the lower section 170 may be coupled and fastened to each other by means of a screw, a snap fit, an adhesive, or any other suitable manner apparent to those skilled in the art.

The upper section 168 also has a generally rectangular top opening 176 and downwardly extending internal upper walls 178 along the top opening 176. The lower section 170 has a generally rectangular bottom opening 180 and upwardly extending internal lower walls 182 along the bottom opening 180. The internal upper walls 178 and the internal lower walls 182 generally sealingly couple to each other to define the opening 154 of the floating device 152. In the illustrated embodiment, the upper section 168 has a downwardly extending hollow stub section 184 and the lower section 170 has an upwardly extending hollow stub section 186 which sealingly couples with the stub section 184. When coupled, the stub sections 184 and 186 define a through hole 188 therein for receiving the connector pipe 161.

In a preferred embodiment as best seen in Figure 9, the internal upper walls 178 may be provided with shelves 190 at two opposing walls thereof. A pair of bearing housings are mounted on the shelves 190 for rotatably supporting the rotary filter element 156. The rotary filter element 156 has a construction similar to that of the exemplary preferred embodiment which is described above with reference to Figure 7.

In the illustrated embodiment as shown in Figure 8, the spray bar 162 is positioned over the rotary filter element 156 so that water sprayed from the spray bar 162 falls only over one side of the rotary filter element 156. It is appreciated that a portion of the sprayed water absorbed by the rotary filter element 156 adds weight primarily at that one side of the filter element 156. As a result, the sprayed water unbalances the filter wheel element 156, causing the filter element 156 to rotate. The sprayed water then returns to the body of water in which the filtration system 150 floats.

The filter wheel element 156 is positioned so that a portion of the porous media cylinder 157 is submerged directly in the water to be treated. As the filter element 156 rotates, the beneficial bacteria resident on the surfaces of the porous media cylinder 157 of the filter element 156 biologically treat the water in which the cylinder is partially submerged. In preferred embodiments of the present invention, the submersion depth of the filter wheel element 156 may be varied by changing the size of the float housing 152, the height of the shelves 190, or the height of the bearing housings 192 with respect to the shelves 190. The height of the bearing housings 192 may be changed by the use of spacers (not shown) between the bearing housings 192 and the shelves 190. As discussed above, the optimal submersion depth of the filter wheel element 156 would be determined for a given size of the filter wheel element 156 and a given flow rate of water flowing from the spray bar 162.

While the invention has been described with respect to the illustrated embodiments in accordance therewith, it will be apparent to those skilled in the art that various modifications and improvements may be made without departing from the scope of the invention. For example, two filter wheel elements or more may be arranged in the biological filtering system in accordance with one embodiment of the present invention. Also, the axis of rotation of the rotating filter element need not pass through a unitary absorptive body of material. Instead, the filter element may include a plurality of absorptive masses of reticulated material housed in compartments of the filter element. Other embodiments are also possible, their specific designs depending upon the particular application. As such, the scope of the invention should not be limited by the particular embodiments herein described but should be defined only by the appended claims and equivalents thereof.

## Claims

1. A biological filter assembly for treating water in an aquatic system, comprising:
a porous water absorbing body (16;156) of material adapted for rotation about an axis of rotation; and means (12,14,161,162) for supplying water to the body to be absorbed by a portion of the body so as to cause the body to rotate about an axis, **characterized in that** said water absorbing body is constructed and positioned relative to said means for supplying water such that the weight of said absorbed water unbalances said body about said axis, whereby the body is rotated primarily by the weight of water absorbed in said body.

2. A filter assembly according to claim 1, wherein the body (16;156) is a unitary mass of reticulated, cellular foam and the axis of rotation passes through the body.

3. A filter assembly according to claim 1, wherein the body (16;156) is a mass of interconnected fibers and the axis of rotation passes through the body.

4. A filter assembly to any preceding claim, comprising a float (152) for rotatably supporting the body (156) partially submerged in the water to be treated.

5. A filter assembly accordingly to any preceding claim wherein the porous water absorbing body (16;156) is a generally cylindrical mass of material;
means (18) are provided for rotatably supporting said cylindrical body about the axis of rotation;
the means (12,14;161,162) for supplying water provides a flow of water onto said cylindrical body to be absorbed by said cylindrical body wherein the weight of said absorbed water unbalances said cylindrical body about said axis of rotation to thereby impart rotational movement to said cylindrical body to expose at least a portion of said cylindrical body alternately to water and the atmosphere; and
control means (34) are provided for controlling the rotational speed of said cylindrical body.

6. A filter assembly according to claim 5, wherein a portion of said cylindrical body (16;156) is adapted to be submerged in water to a submersion depth and said control means (34) regulates the submersion depth of said cylindrical body.

7. A filter assembly according to claim 5 or 6, wherein said control means directs the flow of water onto the cylindrical body relative to the axis of rotation of the cylindrical body.

8. A filter assembly according to claim 5, 6 or 7, wherein said water absorptive mass comprises a reticulated material to increase the surface area available for bacteria growth.

9. A filter assembly according to claim 6, wherein said control means comprises a container (56) for receiving said cylindrical body and containing the water in which the portion of said cylindrical body is submerged, said container having a weir device (34) over which water flows out of said container wherein the height of the weir device defines the level of water in said container.

10. A filter assembly according to claim 5 or 6, wherein said control means includes a flow rate control device for regulating the rate of said flow of water.

11. A filter assembly according to claim 9, wherein the control means has means for adjusting the height of said weir device (34) to regulate the level of water in said container.

12. A filter assembly according to claim 6, wherein said supporting means comprises a float housing (152) adapted to float on water and defining therein an opening (154) for receiving said cylindrical body (156), said control means comprising submersion adjusting means provided at said float housing for adjusting the portion of said cylindrical body which is submerged in the water upon which the housing is floating.

13. A filter assembly according to claim 12, wherein said float housing (152) has at least a bottom wall defining an opening (154) for receiving said cylindrical body therein, and wherein said submersion adjusting means is adapted to adjust the level of said axis of rotation of said cylindrical body with respect to said bottom wall.

14. A filter assembly according to claim 6, wherein said cylindrical body (16;156) has a predetermined diameter wherein the depth of said submerged portion is approximately 20% to 40% of the diameter of said cylindrical body.

15. A filter assembly according to claim 14, wherein the depth of said submerged portion is approximately 30% to 40% of the diameter of said cylindrical body.

16. A filter assembly according to any of claims 5 to 15, wherein said control means controls the rotational speed of said cylindrical body to be approximately 0.5 to 10 RPM.

17. A filter assembly according to claim 16, wherein said control means controls the rotational speed of said cylindrical body to be approximately 1 to 5 RPM.

18. A filter assembly according to claim 8, wherein said reticulated material is a reticulated ether-based polyurethane foam having a porosity of 4-24 pores per cm (10-60 pores per inch).

19. A filter assembly according to claim 5, wherein said reticulated material includes reticulated fibers and a resin at least partially bridging said reticulated fibers to define pores in said reticulated fibers.

20. A filter assembly according to claim 19, wherein said reticulated, fibrous material is "Aquacell Plus" made by Hobbs Industries.

21. A filter assembly according to claim 5, wherein said water supply means comprises a pre-filtering element (54;164) for filtering water before the water is provided to the rotating body.

22. A filter assembly according to claim 5, wherein:
the axis of rotation of said cylindrical body (16;156) is substantially horizontal; and
said water supply means (12,14;161,162) deliver water onto said cylindrical body at a location on one side only of the cylinder.

23. A filter assembly according to claim 5, wherein said body (16;156) has an outer surface in the form of a circular cylinder.

## Patentansprüche

1. Biologische Filteranordnung für die Behandlung von Wasser in einem wässrigen System, bestehend aus:
einem poröses Wasser absorbierenden Körper (16;156) eines Werkstoffes, angepasst für die Drehung um eine Drehachse, und einer Vorrichtung (12, 14; 161, 162) für die Zuführung von Wasser zu dem Körper, das von einem Teil des Körpers absorbiert werden soll, um so zu verursachen, dass sich der Körper um eine Achse dreht, **dadurch gekennzeichnet, dass** der Wasser absorbierende Körper derart gebaut und aufgestellt ist relativ zu den Mitteln für die Zuführung von Wasser, dass das Gewicht des absorbierten Wassers den Körper um die Achse aus dem Gleichgewicht bringt, wodurch der Körper primär von dem Gewicht des in dem Körper absorbierten Wassers gedreht wird.

2. Filteranordnung gemäss Anspruch 1, wobei der Körper (16;156) eine Einheitsmasse aus netzartigem, zellularem Schaum ist und die Drehachse durch den Körper hindurchgeht.

3. Filteranordnung gemäss Anspruch 1, wobei der Körper (16;156) eine Masse aus verbundenen Fasern ist und die Drehachse durch den Körper hindurch geht.

4. Filteranordnung gemäss irgendeinem der vorangegangenen Ansprüche, bestehend aus einem Schwimmkörper (152) für eine drehbare Auflageunterstützung des Körpers (156), der teilweise unter Wasser getaucht worden ist, um behandelt zu werden.

5. Filteranordnung gemäss irgendeinem der vorangegangenen Ansprüche, wobei der poröse Wasser absorbierende Körper (16;156) aus einer im Allgemeinen zylindrischen Masse eines Werkstoffes besteht; Mittel (18) sind vorgesehen für eine drehbare Auflageunterstützung des zylindrischen Körpers um die Drehachse;
die Vorrichtung (12, 14; 161, 162) für die Zuführung von Wasser liefert einen Fluss von Wasser auf den zylindrischen Körper, um von diesem zylindrischen Körper absorbiert zu werden soll, wobei das Gewicht des absorbierten Wassers den zylindrischen Körper um die Drehachse aus dem Gleichgewicht bringt, um dadurch dem zylindrischen Körper eine Drehbewegung zu erteilen, um mindestens einen Teil des zylindrischen Körpers abwechselnd dem Wasser und der Atmosphäre auszusetzen; und
ein Steuermittel (34) ist vorgesehen für die Steuerung der Drehgeschwindigkeit des zylindrischen Körpers.

6. Filteranordnung gemäss Anspruch 5, wobei ein Teil des zylindrischen Körpers (16; 156) angepasst ist, in Wasser eingetaucht zu werden bis zu einer Tiefe des Eintauchens, und das Steuermittel (34) reguliert die Tiefe des Eintauchens des zylindrischen Körpers.

7. Filteranordnung gemäss Anspruch 5 oder 6, wobei das Steuermittel den Fluss des Wassers auf den zylindrischen Körper relativ zu der Drehachse des zylindrischen Körpers lenkt.

8. Filteranordnung gemäss Anspruch 5, 6 oder 7, wobei die Wasser absorbierende Masse einen netzartigen Werkstoff enthält, um die Oberfläche zu vergrößern, die für das Wachstum der Bakterien verfügbar ist.

9. Filteranordnung gemäss Anspruch 6, wobei das Steuermittel einen Behälter (56) enthält für die Aufnahme des zylindrischen Körpers und für die Aufbewahrung des Wassers, in das der Teil des zylindrischen Körpers eingetaucht wird, wobei der Behälter ein Überlaufgerät (34) hat, über das Wasser aus dem Behälter herausfließt, und dabei bestimmt die Höhe des Überlaufgerätes die Höhe des Wassers in dem Behälter.

10. Filteranordnung gemäss Anspruch 5 oder 6, wobei das Steuermittel ein Gerät für die Steuerung der Flussrate mit einschließt, um die Geschwindigkeitsrate des Wasserflusses zu regulieren.

11. Filteranordnung gemäss Anspruch 9, wobei das Steuermittel eine Vorrichtung aufweist für die Anpassung der Höhe des Überlaufgerätes (34), um die Höhe des Wassers in dem Behälter zu regulieren.

12. Filteranordnung gemäss Anspruch 6, wobei die Vorrichtung zur Auflageunterstützung ein Schwimmgehäuse (152) umfasst, das so angepasst ist, um auf dem Wasser zu schwimmen und darin eine Öffnung (154) für die Aufnahme des zylindrischen Körpers (156) zu definieren, wobei das Steuermittel eine Anpassungsvorrichtung für das Eintauchen enthält, die an dem Schwimmgehäuse vorgesehen ist für die Anpassung des Teiles des zylindrischen Körpers, der in dem Wasser eingetaucht ist, über dem das Gehäuse schwimmt.

13. Filteranordnung gemäss Anspruch 12, wobei das Schwimmgehäuse (152) mindestens eine Bodenwand aufweist, die eine Öffnung (154) definiert fiir die Aufnahme des zylindrischen Körpers darin, und wobei die Anpassungsvorrichtung für das Eintauchen so angepasst ist, um die Höhe der Drehachse des zylindrischen Körpers in Bezug auf die Bodenwand anzupassen.

14. Filteranordnung gemäss Anspruch 6, wobei der zylindrische Körper (16; 156) einen vorbestimmten Durchmesser hat und wobei die Tiefe des untergetauchten Teiles annähernd 20% bis 40% des Durchmessers des zylindrischen Körpers beträgt.

15. Filteranordnung gemäss Anspruch 14, wobei die Tiefe des untergetauchten Teiles annähernd 30% bis 40% des Durchmessers des zylindrischen Körpers beträgt.

16. Filteranordnung gemäss irgendeinem der Ansprüche 5 bis 15, wobei das Steuermittel die Drehgeschwindigkeit des zylindrischen Körpers steuert, um bei annähernd 0,5 bis 10 UPM (Umdrehungen pro Minute) zu sein.

17. Filteranordnung gemäss Anspruch 16, wobei das Steuermittel die Drehgeschwindigkeit des zylindrischen Körpers steuert, um bei annähernd 1 bis 5 UPM zu sein.

18. Filteranordnung gemäss Anspruch 8, wobei der netzartige Werkstoff ein netzartiger auf Ether basierender Polyurethanschaum ist mit einer Porosität von 4-24 Poren pro cm (10-60 Poren pro inch).

19. Filteranordnung gemäss Anspruch 5, wobei der netzartige Werkstoff netzartige Fasern und ein Harz mit einschließt, das zumindest teilweise die netzartigen Fasern überbrückt, um Poren in den netzartigen Fasern zu bestimmen.

20. Filteranordnung gemäss Anspruch 19, wobei der netzartige, faserige Werkstoff "Aquacell Plus" ist, hergestellt von Hobbs Industries.

21. Filteranordnung gemäss Anspruch 5, wobei die Vorrichtung für die Zuführung von Wasser ein Vorfilterelement (54; 164) enthält für die Filterung von Wasser, bevor das Wasser auf dem Drehkörper angeliefert wird.

22. Filteranordnung gemäss Anspruch 5, wobei:
die Drehachse des zylindrischen Körpers (16; 156) im Wesentlichen horizontal ist; und
die Vorrichtung (12, 14; 161, 162) für die Wasserzuführung Wasser auf den zylindrischen Körper an einer Stelle nur an einer Seite des Zylinders übergibt.

23. Filteranordnung gemäss Anspruch 5, wobei der Körper (16; 156) eine äußere Oberfläche in der Form eines kreisförmigen Zylinders aufweist.

## Revendications

1. Assemblage de filtre biologique pour le traitement de l'eau dans un système aquatique, comprenant:
un corps poreux d'absorption d'eau (16 ; 156) composé d'un matériau déterminé, destiné à tourner autour d'un axe de rotation, et un moyen (12, 14 ; 161, 162) pour amener de l'eau au corps devant être absorbée par une partie du corps, de sorte à entraîner la rotation du corps autour d'un axe, **caractérisé en ce que** ledit corps d'absorption d'eau est construit et positionné par rapport au dit moyen destiné à amener de l'eau de sorte que le poids de ladite eau absorbée entraîne un déséquilibrage dudit corps autour dudit axe, le corps étant ainsi tourné en premier lieu par le poids de l'eau absorbée dans ledit corps.

2. Assemblage de filtre selon la revendication 1, dans lequel le corps (16 ; 156) est constitué par une masse unitaire de mousse cellulaire réticulée, l'axe de rotation traversant le corps.

3. Assemblage de filtre selon la revendication 1, dans lequel le corps (16 ; 156) est constitué par une masse de fibres interconnectées, l'axe de rotation traversant le corps.

4. Assemblage de filtre selon l'une quelconque des revendications précédentes, comprenant un flotteur (152) pour supporter le corps (156) par rotation, partiellement immergé dans l'eau devant être traitée.

5. Assemblage de filtre selon l'une quelconque des revendications précédentes, dans lequel le corps poreux d'absorption d'eau (16 ; 156) est constitué par une masse de matériau généralement cylindrique ;
des moyens (18) étant destinés à supporter ledit corps cylindrique lors de la rotation autour de l'axe de rotation ;
le moyen (12, 14 ; 161, 162) destiné à amener de l'eau établissant un écoulement d'eau sur ledit corps cylindrique, devant être absorbé par ledit corps cylindrique, le poids de ladite eau absorbée entraînant un déséquilibrage dudit corps cylindrique autour dudit axe de rotation, pour conférer ainsi un mouvement de rotation audit corps cylindrique, pour exposer alternativement au moins une partie dudit corps cylindrique à l'eau et à l'atmosphère ; et
des moyens de commande (34) étant destinés à assurer la commande de la vitesse de rotation dudit corps cylindrique.

6. Assemblage de filtre selon la revendication 5, dans lequel une partie dudit corps cylindrique (16; 156) est destinée à être immergée dans l'eau à une profondeur d'immersion déterminée, ledit moyen de commande (34) réglant la profondeur d'immersion dudit corps cylindrique.

7. Assemblage de filtre selon les revendications 5 ou 6, dans lequel ledit moyen de commande dirige un écoulement d'eau sur le corps cylindrique par rapport à l'axe de rotation du corps cylindrique.

8. Assemblage de filtre selon les revendications 5, 6 ou 7, dans lequel ladite masse d'absorption d'eau comprend un matériau réticulé pour accroître l'aire de surface disponible pour la croissance de bactéries.

9. Assemblage de filtre selon la revendication 6, dans lequel ledit moyen de commande comprend un réservoir (56) destiné à recevoir ledit corps cylindrique et contenant de l'eau, dans laquelle est immergée la partie dudit corps cylindrique, ledit réservoir comportant un dispositif déversoir (34) au-dessus duquel l'eau s'écoule hors dudit réservoir, la hauteur du dispositif déversoir définissant le niveau de l'eau dans ledit réservoir.

10. Assemblage de filtre selon les revendications 5 ou 6, dans lequel ledit moyen de commande englobe un dispositif de commande du débit pour régler le débit dudit écoulement d'eau.

11. Assemblage de filtre selon la revendication 9, dans lequel le moyen de commande comprend un moyen pour ajuster la hauteur dudit dispositif déversoir (34) pour régler le niveau d'eau dans ledit réservoir.

12. Assemblage de filtre selon la revendication 6, dans lequel ledit moyen de support comprend un boîtier flottant (152) destiné à flotter sur l'eau et à définir une ouverture (154) destinée à recevoir ledit corps cylindrique (156), ledit moyen de commande comprenant un moyen d'ajustement de l'immersion agencé au niveau dudit boîtier flottant pour ajuster la partie dudit corps cylindrique immergée dans l'eau sur laquelle flotte le boîtier.

13. Assemblage de filtre selon la revendication 12, dans lequel ledit boîtier flottant (152) comporte au moins une paroi inférieure définissant une ouverture (154) destinée à recevoir ledit corps cylindrique, ledit moyen d'ajustement de l'immersion étant destiné à ajuster le niveau dudit axe de rotation dudit corps cylindrique par rapport à ladite paroi inférieure.

14. Assemblage de filtre selon la revendication 6, dans lequel ledit corps cylindrique (16; 156) a un diamètre prédéterminé, la profondeur de ladite partie immergée représentant environ 20% à 40% du diamètre dudit corps cylindrique.

15. Assemblage de filtre selon la revendication 14, dans lequel la profondeur de ladite partie immergée représente environ 30% à 40% du diamètre dudit corps cylindrique.

16. Assemblage de filtre selon l'une quelconque des revendications 5 à 15, dans lequel ledit moyen de commande assure la commande de la vitesse de rotation dudit corps cylindrique de sorte à correspondre à peu près à 0,5 à 10 tours par minute.

17. Assemblage de filtre selon la revendication 16, dans lequel ledit moyen de commande assure la commande de la vitesse de rotation dudit corps cylindrique de sorte à correspondre à peu près à 1 à 5 tours par minute.

18. Assemblage de filtre selon la revendication 8, dans lequel ledit matériau réticulé est une mousse de polyuréthane à base d'éther réticulée ayant une porosité comprise entre 4 et 24 pores par cm (10 à 60 pores par pouce).

19. Assemblage de filtre selon la revendication 5, dans lequel ledit matériau réticulé englobe des fibres réticulées et une résine assurant au moins partiellement le pontage desdites fibres réticulées pour définir des pores dans lesdites fibres réticulées.

20. Assemblage de filtre selon la revendication 19, dans lequel ledit matériau fibreux réticulé est du « Aquacell Plus » produit par Hobbs Industries.

21. Assemblage de filtre selon la revendication 5, dans lequel ledit moyen d'amenée d'eau comprend un élément de préfiltrage (54 ; 164) pour filtrer l'eau avant l'amenée de l'eau vers le corps rotatif.

22. Assemblage de filtre selon la revendication 5, dans lequel :
l'axe de rotation dudit corps cylindrique (16 ; 156) est pratiquement horizontal ; et
ledit moyen d'amenée d'eau (12, 14 ; 161, 162) amène de l'eau vers ledit corps cylindrique au niveau d'un emplacement situé sur un seul côté du cylindre.

23. Assemblage de filtre selon la revendication 5, dans lequel ledit corps (16 ; 156) comporte une surface externe sous forme d'un cylindre circulaire.
